Europäisches Patentamt

European Patent Office

Office européen des brevets

(19)

(11) **EP 1 249 019 B1**

(12) **EUROPEAN PATENT SPECIFICATION**

(45) Date of publication and mention
of the grant of the patent:
**27.08.2003 Bulletin 2003/35**

(51) Int Cl.$^7$: **G11B 20/12**, G11B 27/10,
G11B 27/30, G11B 27/32,
H04N 7/52, H04N 7/24

(21) Application number: **00979570.9**

(22) Date of filing: **16.11.2000**

(86) International application number:
**PCT/EP00/11335**

(87) International publication number:
**WO 01/054126 (26.07.2001 Gazette 2001/30)**

(54) **METHOD FOR RECORDING OR PLAYBACK OF LOW BITRATE DATA STREAMS**

VERFAHREN ZUR AUFZEICHNUNG ODER WIEDERGABE VON DATENSTRÖMEN MIT
NIEDRIGER BITRATE

PROCEDE D'ENREGISTREMENT OU DE LECTURE DE TRAINS DE DONNEES A FAIBLE DEBIT
BINAIRE

(84) Designated Contracting States:
**AT BE CH CY DE DK ES FI FR GB GR IE IT LI LU
MC NL PT SE TR**

(30) Priority: **17.01.2000 EP 00100836**

(43) Date of publication of application:
**16.10.2002 Bulletin 2002/42**

(73) Proprietor: **Thomson Licensing S.A.
92100 Boulogne-Billancourt (FR)**

(72) Inventors:
• **WINTER, Marco
30173 Hannover (DE)**

• **SCHILLER, Harald
30539 Hannover (DE)**

(74) Representative: **Hartnack, Wolfgang, Dipl.-Ing.
Deutsche Thomson-Brandt GmbH
European Patent Operations
Karl-Wiechert-Allee 74
30625 Hannover (DE)**

(56) References cited:
**EP-A- 0 737 975        EP-A- 0 967 603
EP-A- 0 986 062        EP-A- 0 986 248
EP-A- 1 021 048**

**Description**

The invention relates to a method for recording or playback of low bitrate data streams to be recorded or being recorded on a storage medium, e.g. an optical disc.

Background

Like the CD also its successor, the DVD (digital versatile disc), can be used for various technical purposes. Therefore, different DVD specifications have been defined, like DVD-Video, DVD-Audio and DVD-ROM for the mass distribution of prerecorded motion pictures, music and software programs, respectively. For recording on DVD discs DVD-RAM and DVD+RW serve for general read-and-write applications in the PC or consumer electronics area, while DVD-R is used for write-once recordable media and DVD-RW is a rewritable version of DVD-R. Still under development is a specification for rewritable/re-recordable DVD discs called DVD Stream Recording, abbreviated DVD-SR. DVD-SR shall be used for realtime recording and playback of given packetized bitstreams, wherein the disc in which data are recorded shall comply with any recordable or rewritable or re-recordable media and file system format prescribed in other DVD specifications.

In general, various packetizing formats of bitstreams are used for different applications depending on the system parameters. The MPEG-2 systems standard as defined in ISO/IEC 13818-1 specifies two different formats, the so-called program stream and transport stream. While the transport stream is used for applications with a relatively high error rate, e.g. the transmission of a DVB data stream via satellite, the program stream is used in the case of low error rates like data storage.

The structure of DVD-SR recorded bitstreams shall comply basically with the program stream as defined in ISO/IEC 13818-1. The data of the bitstream are recorded as Stream Objects (SOBs), wherein SOBs are organized into Stream Object Units (SOBUs) of a constant size of 64 kbyte. Each SOBU in turn consists of a constant number of so-called stream packs consisting of a pack header followed by a stream packet. A stream packet contains further header data and Application Packet (AP_PKT) data. To each AP_PKT an Application Timestamp (ATS) is assigned. This timestamp enables proper Application Packet delivery during playback.

The time interval captured by a SOBU is not defined but flexible which means that the playback time of a SOBU can vary largely depending on the momentary bitrate of the recorded stream. Therefore, a Mapping List (MAPL) is used for pointing to that SOBU where the desired AP_PKT can be found. Relative time stamps "Incremental APAT" (IAPAT) are assigned to each of the SOBUs corresponding to the time duration of the recorded signal in the respective SOBU. The IAPAT time stamps are derived from times stamps called Application Packet Arrival Time (APAT) which are assigned to incoming Application Packets during recording based on the local reference clock of the DVD-SR.

A limited resolution of 12 bits is used for the IAPAT values, because the MAPL has to be kept in the memory of the streamer device, e.g. a RAM. The maximum IAPAT value corresponds to an upper limit of a SOBU time duration of about 23,3 seconds. This limits the minimum bitrate of a data stream to be recorded to a value of about 5.5 kbit per second.

Invention

It is one object of the invention to disclose a method for recording or playback of packetized bitstreams which is not restricted to the above mentioned minimum bitrate and therefore allows also the recording and playback of very low bitrate data streams. This object is achieved by the method disclosed in claim 1.

The invention is based on the recognition of the fact that a DVD-SR should also be applicable for certain applications where very low bitrates occur temporary or even permanently. However, in case of very low bitrate stream recording there could be less than one application packet and therefore less than one ATS per Stream Object Unit. Therefore, according to the current draft of the DVD-SR specification the proper functioning of the Mapping List data retrieval is not guaranteed.

According to the invention in the case of very low bitrates empty packets are recorded, which are marked as stuffing packets.

The use of these stuffing packets replacing application packets ensures that every Stream Object Unit - even in areas where stuffing is performed - contains at least one Application Time Stamp value. This allows also the recording and playback at very low bitrates, e.g. 100 bit/second.

Drawings

Embodiments of the invention are described with reference to the accompanying drawing, which shows in:

**EP 1 249 019 B1**

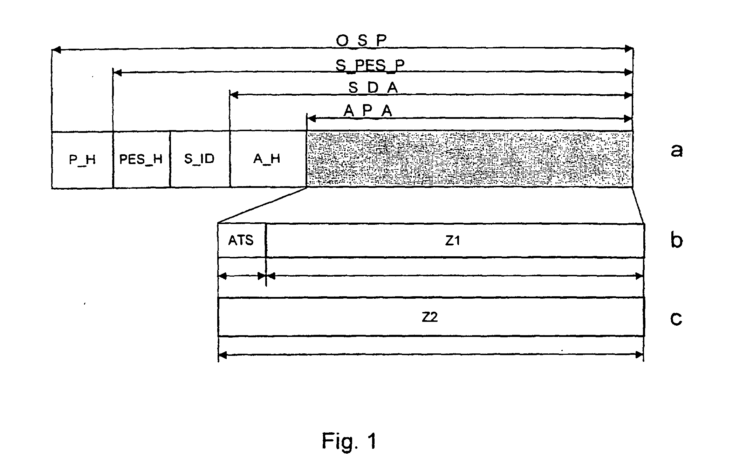

Fig. 1 the structure of stream packs containing parts of Stuffing Packets.

<u>Exemplary embodiments</u>

Abbreviations used for describing the drawing are explained in the following:

SOB (Stream Object):

1) one take (after editing an origin SOB may be splitted into more than one SOB)
2) consists of MAPL_ENT_Ns SOBUs (MAPL_ENT_Ns>=1; MAPL_ENT_Ns is located in the SOBI of this SOB, i.e. in the IFO file)
3) the stream itselves consists of SOBUs (located in the SRO file)
4) information (location, recording time, start and end time et cetera) about the stream is stored in the SOBIs (located in the IFO file) --> SOBI = SOB Information

SOBU (SOB Unit):

1) is stored in the SRO file
2) each SOBU consists of 65536 bytes = 32 sectors = 32 Stream packs = 32 stream packets
3) a stream consists of contiguous SOBUs

AP_PKT (Application Packet):

1) is stored in the AP_PKT area of a Stream packet (SRO file)
2) an AP_PKT contains the actual payload of the stream
2) an ATS (Application Time Stamp) is in front of each AP_PKT
3) 1 byte =< AP_PKT size =< 64574 bytes
4) an AP_PKT starting in AP_PKT area of sector X may end in the AP_PKT area of sector X+Y, whith 0=<Y=<31
5) the data of an AP_PKT may even cover a SOBU boundary

APAT (AP_PKT Arrival Time) :

1) 48 bit time stamp
2) absolute time stamp
3) most exact time stamp of the DVD SR spec
4) all other time stamps are sub-sets of an APAT
5) the 9 LSB of an APAT describes the 27MHz part of the APAT
6) the (remaining) 39 MSB of an APAT describes the 90kHz part of the APAT

IAPAT (Incremental AP_PKT Arrival Time):

1) element of the MAPL (Mapping List --> see below)
2) relative time stamp (contains the duration of a SOBU) - -> it's the only relative time stamp of the spec
3) range: 1..2^12-2 (i.e. 5.6ms ... 23.3s) --> 12 bit value
4) unit: IAPAT * 512 / 90000Hz
5) IAPAT#n is
    the up-rounded first occuring ATS of SOBU#n+1 minus
    the up-rounded first occuring ATS of SOBU#n.
Up-rounding means ceiling(ATS/2^18).
6) the bits 18 to 29 of an APAT correspond to the 12 bits of an IAPAT

MAPL (Mapping List):

1) is stored in the IFO file
2) each SOBI contains one MAPL
3) a MAPL consists of MAPL_ENT_Ns IAPAT values
4) MAPL_ENT_Ns is equal to the number of SOBUs used by this SOB
5) MAPL and MAPL_ENT_Ns are located in the SOBI

3

6) is used to locate an AP_PKT inside the stream (i.e. to locate sector and the start byte of the AP_PKT inside this sector) via a timestamp (APAT)

SUM_IAPAT (summation of the IAPATs of an MAPL):

1) is not stored anywhere, i.e. must be calculated by summation of the MAPL entries (IAPATs)

2) is used to find the coarse location of the start of an AP_PKT inside the stream via the timestamp of this AP_PKT

3) if X is the timestamp of an AP_PKT we are searching for and

X is between SUM_IAPAT(k) and SUM_IAPAT(k+1), then

the searched AP_PKT starts either in SOBU#k or in SOBU#k+1 --> the result of the search is 2 SOBUs exact

4) after this coarse search the exact location of the AP_PKT must be found via a direct search inside the stream

5) the bits 18 to 47 of an APAT (i.e. the 30 MSB of an APAT) correspond with SUM_IAPAT

ATS (Application Time Stamp):

1) 32 bit time stamp, located in the stream (SRO file)

2) absolute time stamp

3) range: $1..2^{32}-1$ (1/27MHz ... 93.2s) --> i.g. wrap arounds occur inside the stream. I.e. the range of an ATS is too small to be an unambiguous pointer into one whole SOB. Only a complete APAT value is able to be an unambiguous timestamp for a whole SOB.

4) unit of the 23 MSB: 1/90kHz

5) unit of the (remaining) 9 LSB: 1/27MHz

6) exact one ATS is at the front of each AP_PKT

7) exact one ATS is at the front of each Stuffing packet

8) the bits 0 to 31 of an APAT correspond to the 32 bits of an ATS

9) the bits 18 to 29 of an ATS have the range of the 12 bits of an IAPAT --> of course, IAPAT is relative and ATS is absolute! Therefore, both are not really compareable.

As shown in Figure la, a stream pack O_S_P of 2048 byte consists of a stream pack header P_H of 14 byte and a stream PES packet S_PES_P of 2034 byte. The stream PES packet S_PES_P consists of a PES header PES_H of 6 byte, identification data S_ID of 1 byte designating the subsequent payload as Stream Recording Data and a stream data area S_D_A of 2027 byte. The Stream Data Area S_D_A inside a stream packet consists of an Application Header A_H of 9 byte and an Application Packet Area A_P_A of 2018 byte. For normal bitrates the Application Packet Area A_P_A is filled with a sequence of AP_PKTs, each prefixed by an Application Time Stamp ATS. The ATS consists of a 32-bit value and is divided into two parts, namely a base part and an extension part.

In cases of very low bitrate stream recording, stuffing is performed in order to guarantee the proper functioning of the Mapping List data retrieval. For this purpose, a Stuffing Packet is defined as a conceptual unit. The purpose of the stuffing packet is to ensure that every SOBU00 - even in areas of stuffing - contains at least one Application Time Stamp ATS value. As shown in figure 1 b, in the stream pack containing the start of the stuffing packet the Application Packet Area A_P_A consist of one ATS of 4 Bytes followed by an area Z1 of stuffing bytes. The subsequent stream packs contain the rest of the stuffing packet. An Application Packet Area A_P_A consisting only of stuffing bytes Z2 is schematically shown in figure 1 c.

Stuffing Packets shall fulfill the following rules:

Stuffing Packets always start at the start of the Application Packet Area of the stream pack after the stream pack containing genuine Application Packet data.

Stuffing Packets consist of one ATS of 4 Bytes, followed by as many zero bytes as are needed to fill the Application Data Areas of the remaining packs of the SOBU. Therefore, the total length of a Stuffing Packet is (4+2014+(n-1)*2018) Bytes, where $0 \leq n <$ SOBU_SIZ and SOBU_SIZ is the number of packs in one SOBU.

Although a value of zero for the stuffing bytes may be appropriate for most applications, it is of course also possible to choose other values for filling the Application Data Areas.

The ATS of a Stuffing Packet shall be set as follows:

• in a SOBU where at least one pack contains genuine Application Packet data, the ATS of the Stuffing Packet shall be set to the ATS of the Application Packet preceding the Stuffing Packet;

- in a SOBU where no real Application Packet data are contained, the ATS of the Stuffing Packet shall be set to

$$ATS = SUM\_IAPAT(k\text{-}1)[(31\text{-}MTU\_SHFT)..0]*2^{MTU\_SHFT}$$

where SUM_IAPAT is derived from entries of a Mapping List (MAPL) comprising time stamps assigned to the Stream Object Units and MTU_SHFT is a constant derived from the Stream Object Unit size and the maximum allowable bitrate.

All packs containing Stuffing Packets or parts of Stuffing Packets shall be constructed as follows:

- the System Clock Reference SCR, as specified by the MPEG-2 Systems standard, of the Pack Header shall be calculated according to

$$SCR = SCR\_previous + 2048*8bits/10.08Mbps,$$

where SCR_previous shall denote the SCR of the previous pack of the DVD Streamer specification;

- the PES Packet Header PES_H and the identification data S_ID shall be specified same as for all other PES Packets;
- the Application Header shall be specified with AP_Ns=0, FIRST_AP_OFFSET=0, EXTENSION_HEADER_INFO=00b, SERVICE_ID=0, MAX_BR_LOG2=0, and SMO_BS_LOG2=0, where these parameters are defined in the preliminary DVD streamer specification.

For the upper limit of the mapping list entries, it has been derived that for all Application Packets *i* in a SOBU *k*, the following upper limit must be kept.

$$APAT_i [47..18] < sum\_iapat(k\text{-}1) + (2^{12} - 2),$$

where $APAT_i$ is the Application Packet Arrival Time of Application Packets I, i.e. an absolute timestamp having e.g. a 48-bit value format.

In order to guarantee that the limitation of this equation is being kept, the following steps or any equivalent operations can be performed during recording:

a) Upon filling a SOBU with data, memorize the ATS of the first Application Packet (AP), which starts in the current SOBU.
b) Continuously check the Streamer system clock TSC, whether it fulfils

$$TSC[47..18] < sum\_iapat(k\text{-}1) + (2^{12}\text{-}2)$$

c) As soon as this is violated,
c.1) Terminate the current recording sector, using an AP_PKT_Ns value which might be smaller than technically possible, wherein AP_PKT_Ns is the number of AP_PKTs starting in this Stream Pack.
c.2) Terminate the current SOBU by filling the remainder of the SOBU - if necessary - with a Stuffing Packet as described above; write current SOBU data to disc.
c.3) Create a mapping list entry IAPAT(k)=$2^{12}$-2
c.4) Increment k by 1.
c.5) Start the recording of SOBU#k and open its first sector for recording.
c.6) If an AP_PKT arrives at TSC[47..0] = SUM_IAPAT(k-1)*$2^{18}$, then proceed to step at a)
c.7) Record SOBU#k as a SOBU containing only a Stuffing packet (ATS = SUM_IAPAT(k-1)[13..0]*$2^{18}$).
c.8) If no AP_PKT arrives during TSC[47..18] < SUM_IAPAT(k-1) + ($2^{12}$ - 2), then proceed to step c.3) c.9) AP_PKT is the first AP_PKT of SOBU#k+1.
c.10) Set IAPAT(k)
c.11) Increment k by 1.
c.12) Proceed to step a)

The application packets may contain any type of data, e.g. video or audio or additional data like service information. The data rate to be handled in the streamer may therefore range up to e.g. an 80 Mbit/s peak data rate value for detailed complexly moving scenes of video signals.

The invention can be used in any apparatus for recording and playback of packetized bitrate data streams, e.g. a so-called DVD streamer. Furthermore, the invention can be used for arbitrary storage media for recording and playback of packetized bitrate streams, especially for DVD discs.

**Claims**

1.  Method for recording or playback of low bitrate data streams, wherein packets of the data stream are recorded in data blocks of constant size and time stamps are used for addressing of the data blocks, the time stamps corresponding to the time duration necessary for a total filling of a data block at the used bitrate, and wherein a maximum time duration is defined corresponding to the total filling of a data block at a minimum bitrate, **characterised by** that in the case of bitrates below the minimum bitrate empty packets are recorded, which are marked as stuffing packets.

2.  Method according to claim 1, wherein the recorded data are organized into Stream Object Units consisting of stream packs (O_S_P) with a stream pack header (P_H) followed by a stream packet (S_PES_P), wherein a stream packet (S_PES_P) contains further header data (PES_H, S_ID, A_H) and an Application Packet Area (A_P_A), which is filled with a sequence of Application Packets prefixed by an Application Time Stamp (ATS), wherein in the stream pack containing the start of the stuffing packet the Application Packet Area (A_P_A) consists of an Application Time Stamp (ATS) followed by stuffing bytes (Z1) and the subsequent stream packs contain the rest (Z2) of the stuffing packet.

3.  Method according to claim 2, wherein a Stuffing Packet starts at the start of the Application Packet Area (A_P_A) of the stream pack (O_S_P) after the stream pack containing genuine Application Packet data.

4.  Method according to claim 2 or 3, wherein Stuffing Packets consist of an Application Time Stamp (ATS), followed by as many zero bytes as are needed to fill the Application Data Areas of the remaining packs of the Stream Object Unit.

5.  Method according to any of claims 2 to 4, wherein the Application Time Stamp (ATS) of a Stuffing Packet is set as follows:

    •   in a Stream Object Unit where at least one pack contains genuine Application Packet data, the Application Time Stamp (ATS) of the Stuffing Packet is set to the Application Time Stamp (ATS) of the Application Packet preceding the Stuffing Packet;
    •   in a Stream Object Unit where no real Application Packet data are contained, the Application Time Stamp (ATS) of the Stuffing Packet is set to

    $$ATS = SUM\_IAPAT(k\text{-}1)[(31\text{-}MTU\_SHFT)0]*2^{MTU\_SHFT}$$

    where SUM_IAPAT is derived from entries of a Mapping List (MAPL) comprising time stamps assigned to the Stream Object Units and MTU_SHFT is a constant derived from the Stream Object Unit size and the maximum allowable bitrate and k is the number of this Stream Object Unit.

6.  Apparatus for recording or playback of low bitrate data streams comprising means for recording empty pockets, which are marked as stuffing packets, in case of bitrate, below the minimum bitrate by carrying out the method according to any of claims 1 to 5.

7.  Storage medium storing low bitrate data streams containing empty packets which are marked as stuffing packets and obtainable using the method according to any of claims 1 to 5.

**Patentansprüche**

1. Verfahren zum Aufzeichnen oder Wiedergeben von Datenströmen mit niedriger Bit-Rate, bei dem Pakete des Datenstroms in Daten-Blöcken mit konstanter Größe aufgezeichnet werden und Zeitmarken zum Adressieren der Datenblöcke verwendet werden, wobei die Zeitmarken der Zeitdauer entsprechen, die für eine gesamte Füllung des Datenblocks bei der verwendeten Bit-Rate erforderlich ist, und bei dem eine maximale Zeitdauer definiert wird, die der gesamten Füllung eines Datenblocks bei einer minimalen Bit-Rate entspricht, **dadurch gekennzeichnet, dass** im Fall von Bit-Raten unterhalb der minimalen Bit-Rate leere Pakete aufgezeichnet werden, die als Füllpakete markiert werden.

2. Verfahren nach Anspruch 1, bei dem die aufgezeichneten Daten in Strom-Objekt-Einheiten organisiert werden, die aus Strompaketen (O_S_P) mit einem Strom-Pack-Header (P_H), dem ein Strompaket (S_PES_P) folgt, bestehen, wobei ein Strompaket (S_PES_P) weitere Header-Daten (PES_H, S_ID, A_H) und einen Anwendungs-Paket-Bereich (A_P_A) enthält, der mit einer Sequenz von Anwendungs-Paketen gefüllt ist, denen ein Anwendungs-Zeitmarken (ATS) vorangestellt ist, wobei in dem Strom-Pack, der den Start des Füllpakets enthält, der Anwendungs-Paket-Bereich (A_P_A) aus einem Anwendungs-Zeitmarken (ATS) besteht, dem Füll-Bytes (Z1) folgen und die nachfolgenden Strom-Packs den Rest (Z2) des Füllpakets enthalten.

3. Verfahren nach Anspruch 2, bei dem ein Füllpaket beim Beginn des Anwendungs-Paket-Bereichs (A_P_A) des Strom-Packs (O_S_P) nach dem Strom-Pack beginnt, der echte Anwendungs-Paket-Daten enthält.

4. Verfahren nach Anspruch 2 oder 3, bei dem die Füllpakete aus einem Anwendungs-Zeitmarken (ATS) bestehen, dem so viele Null-Bytes folgen, wie benötigt werden, um die Anwendungs-Daten-Bereiche der verbleibenden Packs der Strom-Objekt-Einheit zu füllen.

5. Verfahren nach einem der Ansprüche 2 bis 4, bei dem der Anwendungs-Zeitmarken (ATS) eines Füllpakets wie folgt festgelegt wird:

   · in einer Stromobjekt-Einheit, in der wenigstens ein Pack echte Anwendungs-Paket-Daten enthält, wird der Anwendungs-Paket-Zeitmarken (ATS) des Füllpakets auf den Anwendungs-Zeitmarken (ATS) des dem Füllpaket vorangehenden Anwendungs-Pakets gesetzt;
   · in einer Strom-Objekt-Einheit, in der keine realen Anwendungs-Paket-Daten enthalten sind, wird der Anwendungs-Zeitmarken (ATS) des Füllpakets gesetzt auf

   $$ATS=SUM\_IAPAT(k-1)[(31-MTU\_SHFT)..0]*2^{MTU\_SHFT}$$

   wobei SUM_IAPAT von Einträgen einer Zuordnungs-Liste (MAPL) abgeleitet wird, die Zeitmarken umfasst, die den Strom-Objekt-Einheiten zugeordnet werden, und wobei MTÜ_SHFT eine Konstante ist, die von der Größe der Strom-Objekt-Einheit und der maximal zulässigen Bit-Rate abgeleitet wird, und wobei k die Nummer dieser Strom-Objekt-Einheit ist.

6. Vorrichtung zur Aufzeichnung und Wiedergabe von Datenströmen mit niedriger Bit-Rate, umfassend Mittel zum Aufzeichnen leerer Pakete, die im Fall von Bit-Raten unterhalb der minimalen Bit-Rate als Füllpakete markiert werden, indem das erfindungsgemäße Verfahren gemäß einem der Ansprüche 1 bis 5 ausgeführt wird.

7. Speichermedium, das Datenströme mit niedriger Bit-Rate speichert, die leere Pakete enthalten, die als Füllpakete markiert sind und durch Verwendung des erfindungsgemäßen Verfahrens gemäß einem der Ansprüche 1 bis 5 erhalten werden können.

**Revendications**

1. Procédé d'enregistrement ou de lecture de trains de données à faible débit binaire, dans lequel des paquets du train de données sont enregistrés en blocs de données de taille constante et des estampilles sont utilisées pour l'adressage des blocs de données, les estampilles correspondant à la durée de temps nécessaire à un remplissage total d'un bloc de données au débit binaire utilisé, et où une durée de temps maximale est définie comme correspondant au remplissage total d'un bloc de données à un débit binaire minimal, **caractérisé en ce que** dans le cas de débits binaires inférieurs au débit binaire minimal, des paquets vides sont enregistrés, lesquels sont marqués comme paquets de remplissage.

2. Procédé selon la revendication 1, dans lequel les données enregistrées sont organisées dans des Unités d'Objets de Flux composées de paquets de flux (O_S_P) comportant un en-tête de paquet de flux (P_H) suivi d'un paquet de flux (S_PES_P), où un paquet de flux (S_PES_P) contient en outre des données d'en-tête (PES_H, S_ID, A_H) et une Zone de Paquet d'Application (A_P_A), laquelle est remplie avec une séquence de Paquets d'Application prédéfinis par une Estampille d'Application (ATS), où, dans le paquet de flux contenant le début du paquet de remplissage, la Zone de Paquet d'Application (A_P_A) comprend une Estampille d'Application (ATS) suivie d'octets de remplissage (Z1) et les paquets de flux suivants contiennent le reste (Z2) du paquet de remplissage.

3. Procédé selon la revendication 2, dans lequel un Paquet de Remplissage commence au début de la Zone de Paquet d'Application (A_P_A) du paquet de flux (O_S_P) après le paquet de flux contenant des données de Paquet d'Application réelles.

4. Procédé selon la revendication 2 ou 3, dans lequel des Paquets de Remplissage se composent d'une Estampille d'Application (ATS) suivie d'autant d'octets zéro que nécessaire pour remplir les Zones de Données d'Application des paquets restants de l'Unité d'Objets de Flux.

5. Procédé selon n'importe laquelle des revendications 2 à 4, dans lequel l'Estampille d'Application (ATS) d'un Paquet de Remplissage est définie comme suit :

- dans une Unité d'Objets de Flux où au moins un paquet contient des données de Paquet d'Application réelles, l'Estampille d'Application (ATS) du Paquet de Remplissage est définie sur l'Estampille d'Application (ATS) du Paquet d'Application précédent le Paquet de Remplissage ;

- dans une Unité d'Objets de Flux où aucune donnée de Paquet d'Application réelle n'est contenue, l'Estampille d'Application (ATS) du Paquet de Remplissage est définie sur

$$ATS = SUM\_IAPAT(k\text{-}1)[(31\text{-}MTU\_SHFT)..0]*2^{MTU\_SHFT}$$

où SUM_IAPAT est dérivée d'entrées d'une Liste de Mappage (MAPL) comprenant des estampilles attribuées aux Unités d'Objets de Flux et MTU_SHFT est une constante dérivée de la taille d'Unité d'Objets de Flux et du débit binaire maximal autorisé et k est le nombre de cette Unité d'Objets de Flux.

6. Appareil d'enregistrement ou de lecture de trains de données à faible débit binaire comprenant des moyens d'enregistrement de paquets vides qui sont marqués comme étant des paquets de remplissage, dans le cas de débits binaires inférieurs au débit binaire minimal lors de la mise en oeuvre du procédé conforme à n'importe laquelle des revendications 1 à 5.

7. Support de stockage stockant des trains de données à faible débit binaire contenant des paquets vides qui sont marqués comme étant des paquets de remplissage et pouvant être obtenus à l'aide du procédé conforme à n'importe laquelle des revendications 1 à 5.

Fig. 1